# EUROPEAN PATENT APPLICATION

(11) **EP 2 541 288 A1**
(43) Date of publication of application: **02.01.2013**
(21) Application number: 11171495.2
(22) Date of filing: 27.06.2011
(51) Int. Cl.: G02B 6/00, F21S 4/00, F21Y 103/00, F21Y 101/02

(54) **Light-guided LED indirect lighting device**

(71) Applicant: Kun Dian Photoelectric Enterprise Co., New Taipei city 247 (CN)
(72) Inventor: Lee, Cheng-Sheng, 247 New Taipei City (TW)
(74) Representative: Viering, Jentschura & Partner

(57) **Abstract**

A light-guided LED indirect lighting device includes a receiving channel; a light-guide plate made of a high-transmittance material and fitted in the receiving channel; and a circuit board arranged between the light-guide plate and the receiving channel. The light-guide plate includes two elongated light-transmitting sections located at two lateral sides thereof and protruded beyond the receiving channel; a V-shaped reflective layer integrally formed in a front side of the light-guide plate; and an elongated groove formed on a rear side of the light-guide plate. The circuit board includes a plurality of LEDs extending into the groove to forward face the V-shaped reflective layer, such that light emitted from the LEDs is blocked and reflected by the V-shaped reflective layer to project through the two light-transmitting sections, forming indirect lighting with uniform brightness while eliminating multiple shadows and twinkling.

## Description

### FIELD OF THE INVENTION

The present invention relates to a light-guided LED indirect lighting device, which includes a light-guide plate having a V-shaped reflective layer formed in a front side and a groove formed on a rear side, and a plurality of LEDs extending into the groove to forward face the V-shaped reflective layer, so that light emitted from the LEDs is blocked and reflected by the V-shaped reflective layer to sidewardly project through two lateral sides of the light-guide plate, forming indirect lighting with uniform brightness.

### BACKGROUND OF THE INVENTION

Indirect lighting has been widely applied to the interior design of a building. A completely new and unique visual feeling can be created in a spatial environment by changing the irradiating direction of light sources in the spatial environment. One of the conventional ways to create such unique visual feeling in a spatial environment is to install fluorescent tubes behind ceiling panels or wall panels, so that sufficient light can be provided without exposing the fluorescent tubes to an external environment to adversely affect an overall esthetic appearance thereof. However, in view of the shortage of available energy sources and the constantly increased electricity tariff, the use of a large quantity of fluorescent tubes would require high power consumption. Meanwhile, the fluorescent tubes can only emit white light and yellow light, which seem to be somewhat monotonous in color in terms of interior design.

On the other hand, the light-emitting diode (LED) has the advantages of changeful in color, long service life, lower power consumption than conventional fluorescent tube, mercury-free and environment-friendly, and is therefore a new generation of and the best illuminating light source to replace the fluorescent tubes.

However, since the LED light is directional and not easily uniformly scattered, an LED lamp fails to provide an effectively increased illuminating angle. One of the common ways to overcome this disadvantage is to use a set of LEDs directed to different directions. By doing this, complicated manufacturing procedures are required to inevitably result in increased manufacturing cost while only limited light scattering effect can be achieved. Particularly, the use of multiple LEDs at the same time would produce multiple overlapped shadows, preventing the LED lamp from successfully replacing the conventional lighting devices.

US Patent No. 7,470,054 B2 granted to the same applicant discloses a light-guide board, which mainly includes a light guide plate made out of an optically transmissive material and having a transparent layer and a back reflecting layer formed integral with the back side of the transparent layer. And, according to an embodiment of the light-guide board, a smoothly arched convex portion is protruded from a middle part of a front side of the back reflecting layer. With these arrangements, the light-guide board can be used with sideward illuminating light sources to constitute an ultra-thin lamp to provide uniform and bright light with effectively increased illuminating area without producing multiple overlapped shadows as would be generally found with conventional LED lamps.

While the light-guide board disclosed in US Patent No. 7,470,054 B2 provides very good lighting effect in practical use thereof, it is restricted by the structural design thereof and can only illuminate from a front side of the back reflecting layer of the light guide plate. That is, the LED lamp formed from the light-guiding board and LEDs actually works like a generally direct lighting device and could not be used as an indirect light device if no other mechanism is added thereto. Therefore, the light-guiding board and the LED lamp using same are not suitable for use in building interior design and require improvement.

### SUMMARY OF THE INVENTION

A primary object of the present invention is to provide a light-guided LED indirect lighting device that eliminates the drawbacks in the conventional LED lamps.

To achieve the above and other objects, the light-guided LED indirect lighting device according to the present invention includes a receiving channel, a light-guide plate, and a circuit board. The receiving channel can be configured as a lamp socket shell or be mounted on a wall of a building or on an interior decorative construction material. The light-guide plate is made of a high-transmittance material and fitted in the receiving channel, and includes two elongated light-transmitting sections located at two lateral sides of the light-guide plate and protruded beyond the receiving channel, a whole piece of V-shaped reflective layer integrally formed in a front side of the light-guide plate; and an elongated groove formed on a rear side of the light-guide plate. The circuit board is arranged in a space located between the rear side of the light-guide plate and the receiving channel, and has a plurality of LEDs provided thereon. The LEDs extend into the groove formed on the rear side of the light-guide plate to forward face the V-shaped reflective layer formed in the front side of the light-guide plate, such that light emitted from the LEDs is blocked and reflected by the V-shaped reflective layer to project through the light-transmitting sections located at two lateral sides of the light-guide plate, forming indirect lighting with uniform brightness while eliminating multiple shadows and twinkling.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an exploded perspective view of a light-guided LED indirect lighting device according to a preferred embodiment of the present invention;
Fig. 2 is an assembled cross-sectional view of the light-guided LED indirect lighting device of Fig. 1;
Fig. 3 is an assembled cross-sectional view of a light-guided LED indirect lighting device according to another embodiment of the present invention;
Fig. 4 shows the light-guided LED indirect lighting device according to the present invention includes a receiving channel configured as a lamp socket shell;
Fig. 5 shows the light-guided LED indirect lighting device according to the present invention is directly mounted on a wall of a building; and
Fig. 6 shows a variant of the light-guided LED indirect lighting device according to the present invention for emitting light of different levels of brightness from an upper and a lower side of the lighting device.

### DETAILED DESCRIPTION OF THE PREFERRED EMBODIMENTS

The present invention will now be described with some preferred embodiments thereof and with reference to the accompanying drawings. For the purpose of easy to understand, elements that are the same in the preferred embodiments are denoted by the same reference numerals.

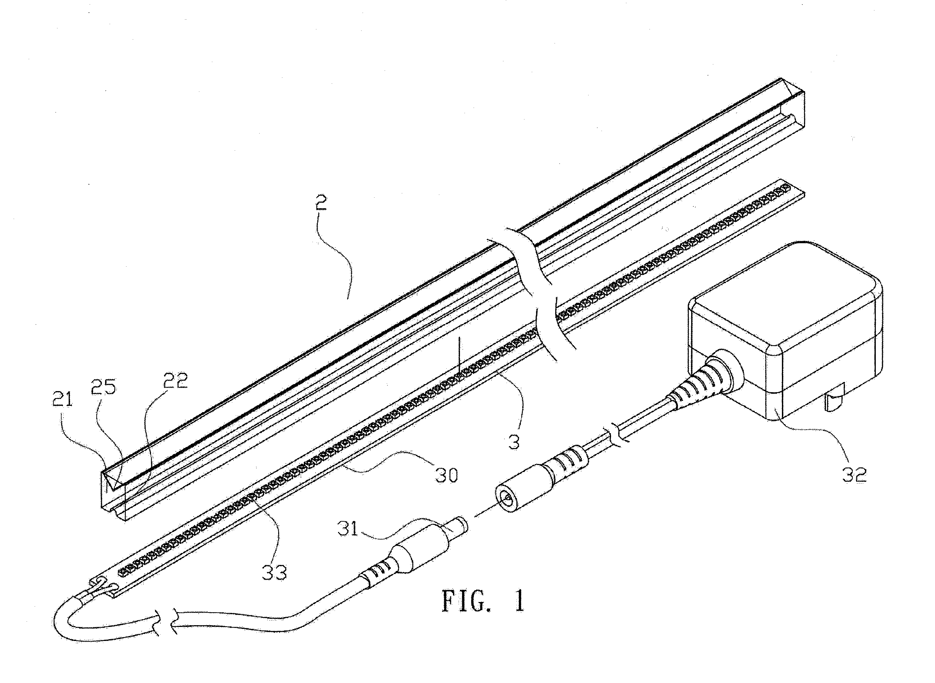

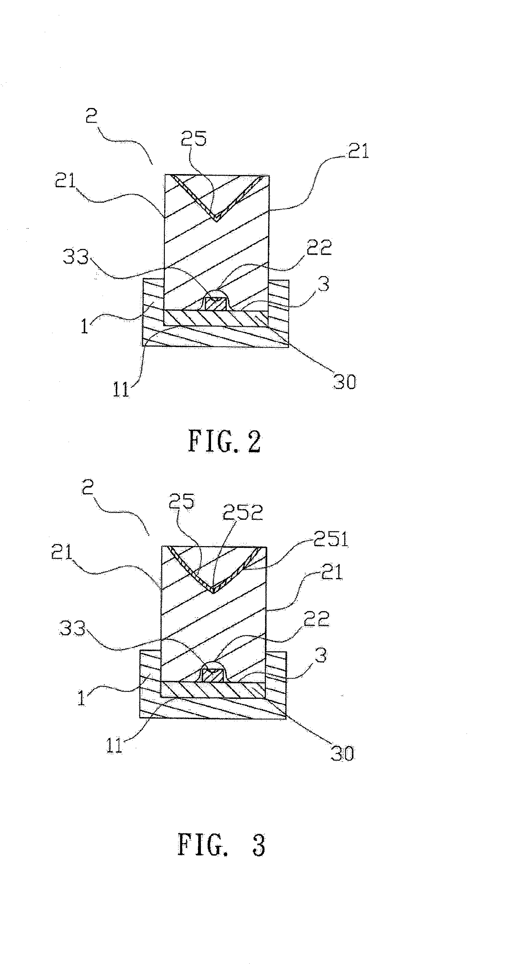

Please refer to Fig. 1 and 2 that are exploded perspective view and assembled cross-sectional view, respectively, of a light-guided LED indirect lighting device according to a preferred embodiment of the present invention. As shown, in the preferred embodiment, the light-guided LED indirect lighting device includes a receiving channel 11 (see Fig. 2), a light-guide plate 2, and a circuit board 3.

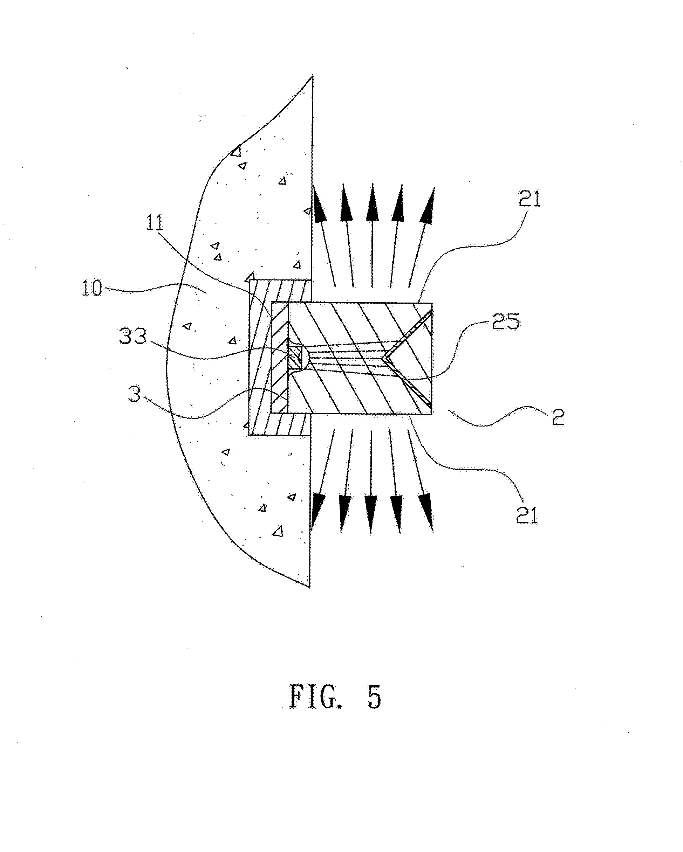

The receiving channel 11 can be configured as a lamp socket shell 1, or be directly mounted on a wall of a building 10 (see Fig. 5) or on an interior decorative construction material (not shown).

The light-guide plate 2 is made of a high-transmittance material and fitted in the receiving channel 11. The light-guide plate 2 includes two lateral sides serving as two elongated light-transmitting sections 21, which are protruded beyond the receiving channel 11; a whole piece of V-shaped reflective layer 25 integrally formed in a front side of the light-guide plate 2; and an elongated groove 22 formed on along a rear side of the light-guide plate 2. Alternatively, in another embodiment of the present invention as shown in Fig. 3, the reflective layer 25 may have a parabolic cross section with a substantially V-shaped bend, so as to define two curved shoulder portions 251 and a middle summit 252. According to a further embodiment, the reflective layer 25 can have a convex surface (not shown) facing toward the rear side of the light-guide plate 2.

The circuit board 3 is arranged in a space located between the rear side of the light-guide plate 2 and the receiving channel 11. The circuit board 3 is formed on a metal board 30, and has an end connected to a cabled connector 31 for correspondingly and detachably coupling to a power supply 32. A plurality of LEDs 33 is provided on the circuit board 3 to extend into the groove 22 formed on the rear side of the light-guide plate 2.

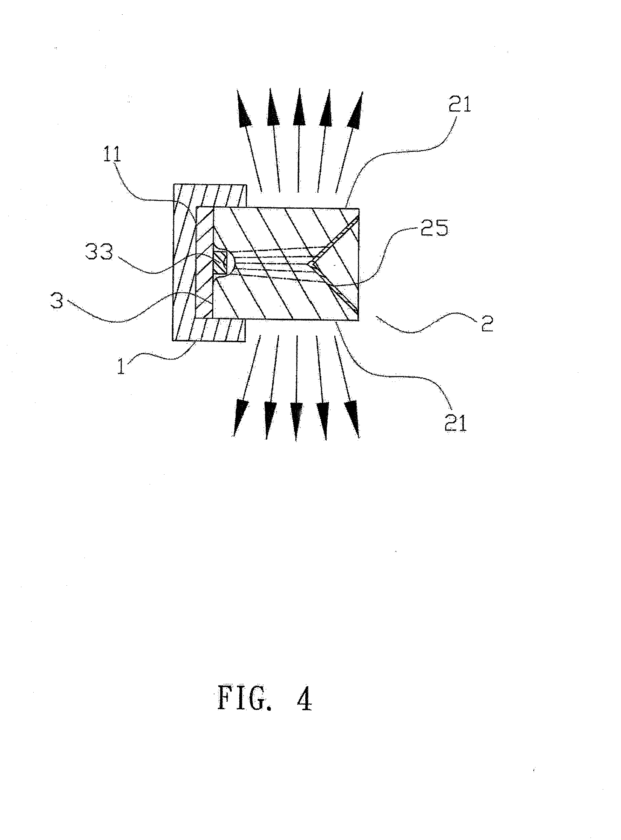

Figs. 4 and 5 illustrate the use of the light-guided LED indirect lighting device of the present invention. When the lighting device is fully assembled and turned on, the LEDs 33 emit light to an incident plane at the rear side of the light-guide plate 2. The emitted light is blocked and reflected by the V-shaped reflective layer 25 located in front of the LEDs 33 to thereby project through the light-transmitting sections 21 at two lateral sides of the light-guide plate 2. The sidewardly projected light is uniformly distributed and bright without producing multiple shadows, enabling the lighting device of the present invention to provide stable light without twinkling and accordingly, create excellent indirect lighting effect.

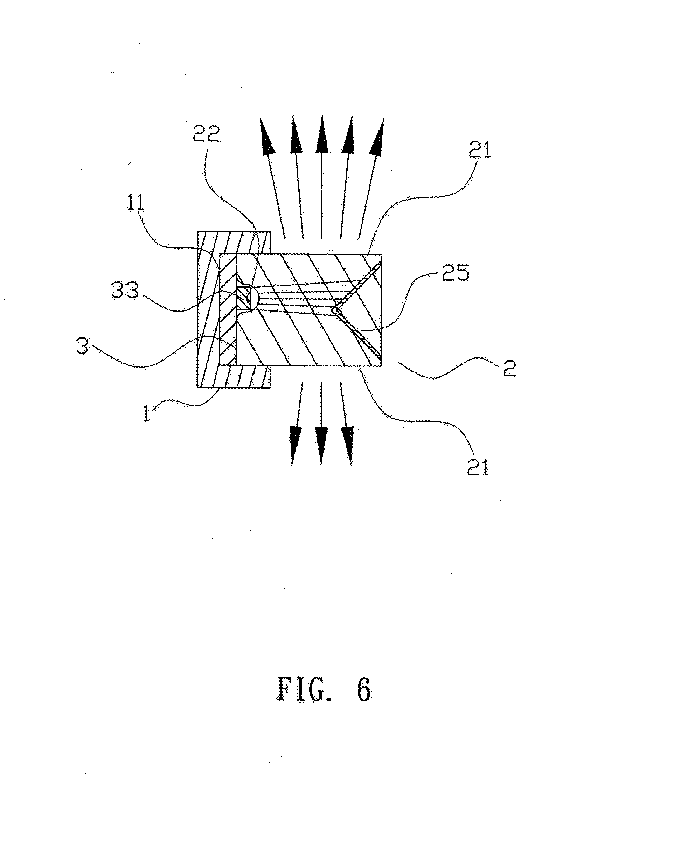

Fig. 6 shows a variant of the present invention. In this variant, the groove 22 provided on along the rear side of the light-guide plate 2 is offset from a centerline of the V-shaped reflective layer 25. For example, when viewing sidewardly as shown in Fig. 6, the groove 22 and the LEDs 33 extended thereinto may be located higher than the centerline of the V-shaped reflective layer 25, so that the light projected through one of the two light-transmitting sections 21 and the light projected through the other light-transmitting section 21 are different in brightness, giving the light-guided LED indirect lighting device of the present invention widened applicability.

The present invention has been described with some preferred embodiments thereof and it is understood that many changes and modifications in the described embodiments can be carried out without departing from the scope and the spirit of the invention that is intended to be limited only by the appended claims.

## Claims

1. A light-guided LED indirect lighting device, comprising:
a receiving channel, which can be directly configured as a lamp socket shell or be directly mounted on a wall of a building or on an interior decorative construction material;
a light-guide plate being made of a high-transmittance material and fitted in the receiving channel; the light-guide plate including two elongated light-transmitting sections located at two lateral sides of the light-guide plate and protruded beyond the receiving channel, a whole piece of V-shaped reflective layer integrally formed in a front side of the light-guide plate; and an elongated groove formed on along a rear side of the light-guide plate; and
a circuit board being arranged in a space located between the rear side of the light-guide plate and the receiving channel, and having a plurality of LEDs provided thereon; the LEDs extending into the groove formed on along the rear side of the light-guide plate to forward face the V-shaped reflective layer formed in the front side of the light-guide plate, such that light emitted from the LEDs is blocked and reflected by the V-shaped reflective layer to project through the light-transmitting sections located at two lateral sides of the light-guide plate to provide indirect lighting.

2. The light-guided LED indirect lighting device as claimed in claim 1, wherein the circuit board is formed on a metal board and has an end connected to a cabled connector for correspondingly and detachably coupling to a power supply.

3. The light-guided LED indirect lighting device as claimed in claim 2, wherein the reflective layer has a parabolic cross section with a substantially V-shaped bend, so as to define two curved shoulder portions and a middle summit on the reflective layer.

4. The light-guided LED indirect lighting device as claimed in claim 2, wherein the groove formed on along the rear side of the light-guide plate is offset from a centerline of the V-shaped reflective layer, such that the light projected through one of the two light-transmitting sections and the light projected through the other light-transmitting section are different in brightness.
